# EUROPEAN PATENT APPLICATION

(11) **EP 3 936 933 A1**
(43) Date of publication of application: **12.01.2022**
(21) Application number: 20305774.0
(22) Date of filing: 07.07.2020
(51) Int. Cl.: G02F 1/1334, G02F 1/1333, G02F 1/137

(54) **WRITING AND DRAWING DEVICE**

(71) Applicant: Société BIC, 92110 Clichy (FR); BIC Violex S.A., 14569 Anoixi (GR)
(72) Inventor: FOLGOAS, Loïc, 92110 CLICHY (FR); GEORGAKIS, Georgios, 14569 ANOIXI (GR)
(74) Representative: Cabinet Beau de Loménie

(57) **Abstract**

A tablet (10) configured for writing and drawing including a housing (80), a first layer (20) arranged within the housing (80) and including a dispersion of cholesteric liquid crystal material and polymer (26), a second layer (40) arranged within the housing (80) and positioned rearward the first layer (20), the second layer (20) configured to transition between a first state and a second state within the housing (80), and wherein the user is capable of seeing through the tablet (10) when the second layer (40) is in the first state and the user is no longer capable of seeing through the tablet (10) when the second layer (40) is in the second state.

## Description

### FIELD

The present disclosure relates generally to the field of writing and drawing devices. More specifically, the present disclosure relates to an electronic device configured to convert an analog input into writing and/or drawing visible on a display.

### BACKGROUND

A typical eWriter device may have a flat surface and/or a display on or at which a user may write and/or draw words, an image, an animation, a graphic, and/or the like using a pen-like drawing instrument. It may be desirable for a user to view external input, such as a separate image or template, through the eWriter, in order to visually aid or accompany the writing and/or drawing of the user on the display. Additionally, it may be desirable for a user to block vision through the eWriter, such that the display is blank except for the writing and/or drawing of the user.

Currently available eWriters, such as that disclosed by U.S. Patent Number 8,139,039, require the use of separate, removable elements, such as a plastic template sheet, in order to alter visibility through the eWriter. Separate, removable elements may be lost and/or create waste. As such, it is desirable to provide an improved tablet device configured to transition between a first state, allowing a user to see through the tablet, and a second state, blocking vision of the user through the tablet, without the use of a separate, removable element, in order to reduce opportunity for the user to lose the separate, removable elements and/or create waste associated with the separate, removable elements.

### SUMMARY

According to aspects of the disclosure, a tablet configured for writing and drawing comprises a housing, a first layer arranged within the housing and including a dispersion of cholesteric liquid crystal material and polymer, a second layer arranged within the housing and positioned rearward of the first layer, the second layer configured to transition between a first state and a second state within the housing, and wherein the user is capable of seeing through the tablet when the second layer is in the first state and the user is no longer capable of seeing through the tablet when the second layer is in the second state.

According to aspects of the disclosure, all or a portion of the second layer may be transparent in the first state.

According to aspects of the disclosure, all or a portion of the second layer may be opaque in the second state.

According to aspects of the disclosure, the second layer may be configured to transition from the first state to the second state in response to a voltage applied to the second layer.

According to aspects of the disclosure, the second layer may include an electrochromic device.

According to aspects of the disclosure, an input applied to the first layer may be in the form of pressure applied to the first layer, and the pressure applied to the first layer may alter a reflectance of the dispersion cholesteric liquid crystal material and polymer.

According to aspects of the disclosure, the first layer may be configured to display an image based upon the pressure applied by the user to the first layer.

According to aspects of the disclosure, the first layer and second layer may be arranged in a sandwiched relationship.

According to aspects of the disclosure, the tablet may include a third layer rearward of the second layer, and the third layer may be in the form of a transparent window.

According to aspects of the disclosure, the first layer may include a first substrate and a second substrate and the dispersion of cholesteric liquid crystal material and polymer may be sandwiched between the first substrate and the second substrate.

According to aspects of the disclosure, the first substrate may be formed of a flexible, polymeric material.

According to aspects of the disclosure, the first substrate and the second substrate may each be coated with a transparent electrically conductive layer.

According to aspects of the disclosure, the first layer may be configured to erase an image visible on the first layer in response to a voltage applied to the first layer.

According to aspects of the disclosure, a method of switching a display of tablet between a customizable display and a blank display includes providing a tablet according to any aspect described herein and transitioning the second layer of the tablet between the first state, wherein the second layer is transparent, and the second state, wherein the second layer is opaque.

According to aspects of the disclosure, the method may include positioning a fourth layer rearward of the tablet when the second layer is in the first state.

In the manner described and according to aspects illustrated herein, the tablet and the method are configured to transition between a first state, allowing a user to see through a tablet, and a second state, blocking vision of the user through the tablet, without the use of a separate, removable elements, which reduces opportunity for the user to lose the separate, removable elements and/or create waste associated with the separate, removable elements.

### BRIEF DESCRIPTION OF THE DRAWINGS

Aspects of an embodiment will be described in reference to the drawings, where like numerals reflect like elements:
Figure 1 is a side perspective view of a tablet configured for writing and drawing (hereafter, "the tablet") and a stylus according to aspects of the disclosure;
Figure 2 is a side perspective view of the tablet of Figure 1, showing a housing of the tablet in hidden lines;
Figure 3 is a bottom cross-sectional view of the tablet of Figure 1, taken along line II of Figure 1;
Figure 4 is an side perspective exploded view of the tablet of Figure 1; and
Figure 5 is a bottom cross-sectional view of the tablet of Figure 1 and a side view of the stylus of Figure 1.

### DETAILED DESCRIPTION

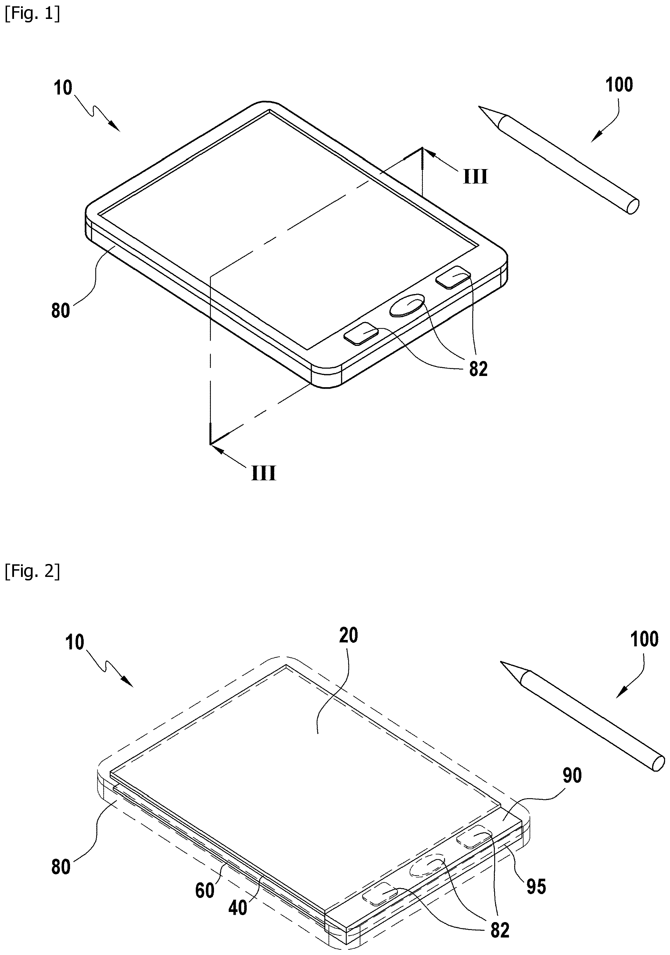

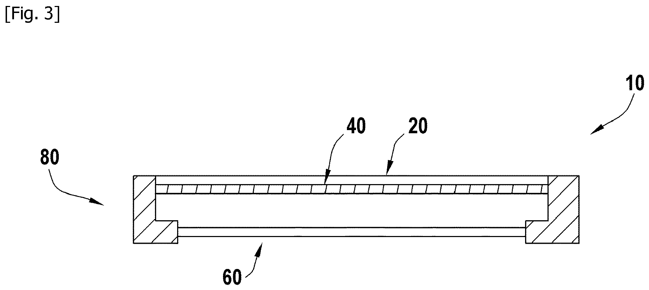

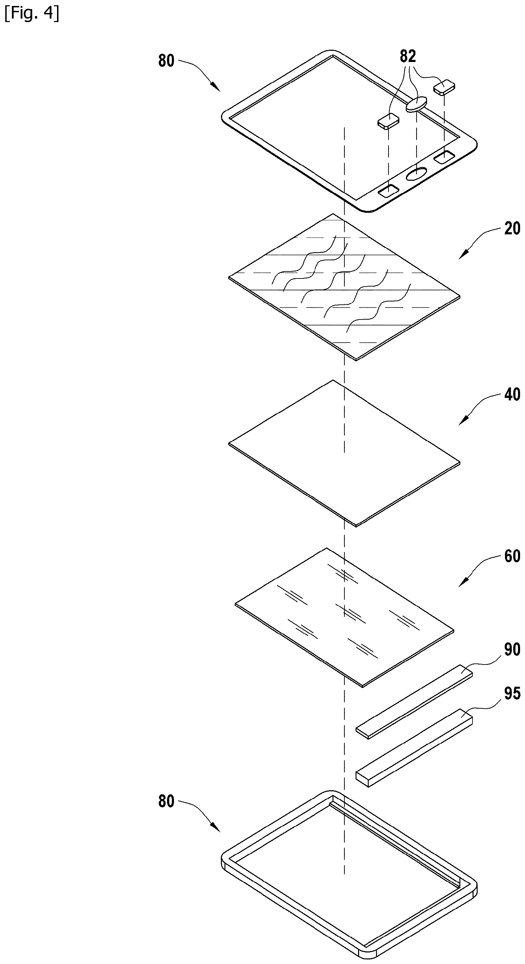

An embodiment of the tablet according to aspects of the disclosure will now be described with reference to Figures 1-5. Like numerals represent like parts, and the tablet will generally be referred to by the reference numeral 10. Although the tablet 10 is described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

Various materials, methods of construction and methods of fastening will be discussed in the context of the disclosed embodiment(s). Those skilled in the art will recognize known substitutes for the materials, construction methods, and fastening methods, all of which are contemplated as compatible with the disclosed embodiment(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

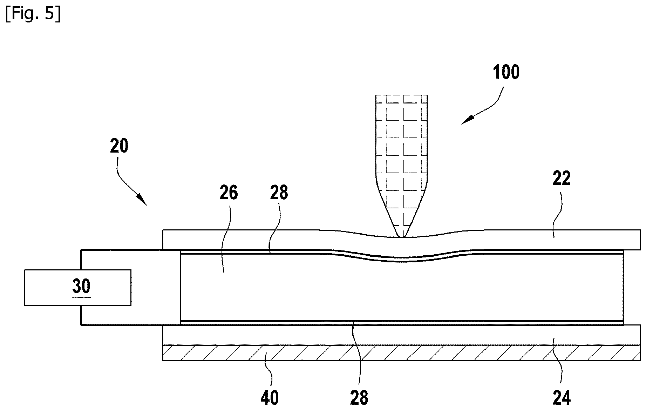

As shown in Figures 1 and 5, the tablet 10 may be configured for writing and/or drawing by a user. It is contemplated that the term "tablet" as used herein may be understood to be a mobile device having a thin, flat shape and a display. Additionally or alternatively, it is contemplated that the term "tablet" as used herein may be understood to be an eWriter device including pressure-sensitive components configured to convert analog input from a user, such as a hand gesture, into writing and/or drawing which is visible on a display. In the disclosed embodiment, the analog input from the user may produce a result in the form of handwriting, hand-drawn images, animations, and/or graphics (referred to hereafter as an "image"). As such, the tablet 10 may be configured to function in combination with a stylus 100 (see Figures 1 and 5). It is contemplated that the term "stylus" as used herein may be understood to be a pen-shaped instrument which may be configured to apply pressure to and/or be detected by the tablet 10.

As shown in Figures 2-4, the tablet 10 may include a display (first layer) 20, a switchable screen (second layer) 40, a window (third layer) 60, a common housing 80, a controller 90, and a battery 95. It is contemplated that the tablet 10 may not include the window 60. In the disclosed embodiment, the display 20, the switchable screen 40, and the window 60 may be oriented in a sandwiched and/or layered relationship. The sandwiched and/or layered relationship may allow the switchable screen 40 to be visible through the display 20. Additionally, the switchable screen 40 and the window 60 may be configured to allow for external input to be seen through the display 20. The term "external input" as used herein may be understood to be a template, grid, photograph, graphic, and/or the like which is not within or a part of the tablet 10, which may function as a fourth layer when visible through the display 20, the switchable screen 40, and the window 60 of the tablet 10. Additionally, the switchable screen 40 may be configured to block external input from being seen through the display 20. In this manner, the tablet 10 includes versatility in enabling a user to utilize the tablet 10 having a blank display 20, without external input being visible through the display 20, and to utilize the tablet 10 having a customized display 20, with external input being visible through the display 20. Additionally, the switchable screen 40 is fully enclosed by the housing 80, as part of the tablet 10. As such, the tablet 10 includes the versatility of having the blank display 20 or customized display 20 without the use of separate, removable elements, such as a plastic template sheet, which may be lost and/or create waste.

As shown in Figure 5, the display 20 may include a first substrate 22, a second substrate 24, and a dispersion of cholesteric liquid crystal material and polymer (referred to hereafter as "the liquid crystal") 26 sandwiched between the first substrate 22 and the second substrate 24. In the disclosed embodiment, droplets of the liquid crystal 26 may not be encapsulated and thus may be unconfined with interconnecting droplets. The liquid crystal 26 may be of the type prepared by polymerization induced phase separation (PIPS). As such, an image may be created by unique electro-optic characteristics of a cell, rather than by flow.

The first substrate 22 may be configured to transmit pressure and/or an input, such as handwriting and/or hand-drawing, from a user. It is contemplated that the pressure and/or the input may be applied to the first substrate 22 by the user gesturing the stylus 100 against the first substrate 22. As such, the first substrate 22 of the display 20 may be oriented as the outermost layer of the display 20 and the switchable screen 40, as the point of contact between the user and the tablet 10. Application of pressure and/or input to the first substrate 22 of the display 20 may cause the input to be visible on the display 20. As such, the first substrate 22 may be constructed of a transparent, flexible material. It is contemplated that the term "transparent" as used herein may be understood to mean that a user may be capable of seeing through the transparent component, such that the user has full visibility through the transparent component. In the disclosed embodiment, the first substrate 22 may be constructed of a polymeric material, such as plastic. Additionally or alternatively, the second substrate 24 may be constructed of a flexible material. However, it is also contemplated that the second substrate 24 may be constructed of a rigid material. In the disclosed embodiment, the second substrate 24 may be constructed of a polymeric material, such as plastic. An inner surface of the first substrate 22 and the second substrate 24 may be coated with transparent electrically conductive layers (electrodes) 28. It is contemplated that the transparent electrically conductive layers 28 may be connected with electrical interconnects to an electronic circuit 30 which provides suitable voltages to the transparent electrically conductive layers 28, usually in the form of a voltage pulse, in order for pressure of the stylus 100 to create an image and/or for the tablet 10 to erase an image. The liquid crystal 26 may be sandwiched between the transparent electrically conductive layers 28. In the disclosed embodiment, the electrically conductive layers 28 may be made from materials such as indium tin oxide (ITO) or a conducting polymer such as PEDOT.

Pressure and/or input applied by a user to the first substrate 22 may change a reflectance of the liquid crystal 26, forming an image. In the disclosed embodiment, the liquid crystal 26 may be in either an initial planar texture or an initial focal conic texture. The pressure and/or input applied by the user to the first substrate 22 may cause a portion of the liquid crystal 26, which is compressed due to the pressure applied (see Figure 5), to change to a texture different from the initial planar texture or initial focal conic texture, forming the image. The electronic circuit 30 may be adapted such that a signal and/or voltage sent from the controller 90 to the display 20 may cause the image to be fully or partially erased by applying an erase voltage waveform or a select-erase voltage waveform, respectively, to the transparent electrically conductive layers 28. Additionally or alternatively, the image may be select-erased by applying the select-erase voltage waveform to the transparent electrically conductive layers 28 while applying pressure to the first substrate 22 and tracing a portion of the image. In the disclosed embodiment, applying the full-erase voltage waveform or the select-erase voltage waveform may return the liquid crystal 28 to the initial planar texture or the initial focal conic texture.

As shown in Figure 2-5, the tablet 10 may include the switchable screen 40 at a position between the display 20 and the window 60. As such, the switchable screen 40 may be positioned rearward of the display 20. Additionally, the window 60 may be positioned rearward of the switchable screen 40. It is contemplated that the term "rearward" as used herein may be understood to mean a side of the display 20, the switchable screen 40, the window 60, and/or the tablet 10 which is further from the gaze of a user when the tablet 10 is in use. Additionally or alternatively, the term "rearward" as used herein may be understood to mean a side of the display 20, the switchable screen 40, the window 60, and/or the tablet 10 which is further from the first substrate 22 of the display 20.

The switchable screen 40 may be configured to transition between a first state and a second state. In the first state, the switchable screen 40 may be transparent. In the first state, a user may be capable of seeing through the display 20, the switchable screen 40, and the window 60, such that the user may be capable of seeing through the tablet 10. As such, in the first state, the user may be capable of seeing external input through the tablet 10 so that the external input is visible in combination with an image on the display 20. In this manner, in the first state, the user may be capable of having a customized display 20 which may visually aid the user and/or accompany the image written and/or drawn by the user. In the second state, the switchable screen 40 may be opaque. It is contemplated that the term "opaque" as used herein may be understood to mean that a user may not be capable of seeing through the opaque component, such that visibility is blocked through the opaque component. Alternatively, in the second state, the switchable screen 40 may be translucent. It is contemplated that the term "translucent" as used herein may be understood to mean that a user may not be fully capable of seeing through the translucent component, such that visibility is partially blocked through the translucent component. In the second state, the user may no longer be capable of seeing through the switchable screen 40 and the window 60, such that the user may no longer be capable of seeing through the tablet 10. As such, in the second state, the user may no longer be capable of seeing external input through the tablet 10 so that the external input is no longer visible in combination with an image on the display 20. In this manner, in the second state, the user may be capable of having a blank display 20 free from any external input.

In the disclosed embodiment, the switchable screen 40 may be constructed of "smart glass." It is contemplated that the term "smart glass" as used herein may be understood to mean a glass having light transmission properties are altered when voltage, light, and/or heat is applied to the glass. As such, the switchable screen 40 may change from transparent in the first state to opaque or translucent in the second state-changing from allowing wavelengths of light to pass through the switchable screen 40, and thus the tablet 10, in the first state, to blocking a portion or all wavelengths of light from passing through the switchable screen 40, and thus the tablet 10, in the second state. To this end, the switchable screen 40 may include an electrochromic device. Alternatively, the switchable screen 40 may include a photochromic device. Alternatively, the switchable screen 40 may include a thermochromic device. Alternatively, the switchable screen 40 may include a suspended-particle device. Additionally or alternatively, a person having ordinary skill in the art would appreciate that the switchable screen 40 may be constructed of materials other than glass. Additionally or alternatively, the switchable screen 40 may include one or more substrate. Additionally or alternatively, the switchable screen 40 may include one or more transparent electrically conductive layer (electrode).

As shown in Figures 2 and 5, the display 20, the switchable screen 40, and the window 60 may be arranged within the housing 80. In the disclosed embodiment, the housing 80 may be constructed of a polymeric material, such as plastic; however, a person having ordinary skill in the art would appreciate that the housing 80 may be constructed of other compatible materials, such as metal. Referring to Figure 1, the housing 80 may include buttons 82 configured to actuate the controller 90. Actuating the controller 90 may cause the controller and/or the electronic circuit 30 to send a signal and/or a voltage to the display 20. Additionally or alternatively, actuating the controller 90 may cause the controller and/or the electronic circuit 30 to send a signal and/or a voltage to the switchable screen 40. Additionally or alternatively, actuating the controller 90 may switch the tablet 10 between a writing and/or drawing mode, an erase mode, a transparent mode (first state of the switchable screen 40), and/or an opaque or translucent mode (second state of the switchable screen 40). Sending the signal and/or the voltage to the display 20 may erase an image which is visible on the display 20. Sending the signal and/or the voltage to the switchable screen 40 may transition the switchable screen 40 between the first state and the second state. In the disclosed embodiment, the controller 90 may be a printed circuit board (PCB).

As shown in Figure 2, the controller 90 may be positioned within the housing 80, below the display 20, the switchable screen 40, and the window 60. It is contemplated that the term "below" as used herein may be understood as a position outside of the sandwiched relationship of the display 20, the switchable screen 40, and the window 60, and/or at a position adjacent to or contiguous with the sandwiched relationship of the display 20, the switchable screen 40, and the window 60. Additionally or alternatively, it is contemplated that the term "below" as used herein may be understood as a position lower the display 20, the switchable screen 40, and the window 60 when the tablet 10 is held by the user in an upright position. The battery 95, which is configured to power the tablet 10, may also be positioned below the display 20, the switchable screen 40, and the window 60. The positioning of the controller 90 and the battery 95 below the display 20, the switchable screen 40, and the window 60 may allow the display 20, the switchable screen 40, and the window 60 to be oriented in the sandwiched relationship. Additionally, positioning of the controller 90 and the battery 95 below the display 20, the switchable screen 40, and the window 60 may allow external input to be visible through the display 20, the switchable screen 40, and the window 60.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A tablet (10) configured for writing and drawing comprising:
a housing (80);
a first layer (20) arranged within the housing (80) and including a dispersion of cholesteric liquid crystal material and polymer (26);
a second layer (40) arranged within the housing (80) and positioned rearward of the first layer (20), the second layer (20) configured to transition between a first state and a second state within the housing (80); and
wherein, the user is capable of seeing through the tablet (10) when the second layer (40) is in the first state and the user is no longer capable of seeing through the tablet (10) when the second layer (40) is in the second state.

2. The tablet (10) of claim 1, wherein all or a portion of the second layer (40) is transparent in the first state.

3. The tablet (10) of any of claims 1-2, wherein all or a portion of the second layer (40) is opaque in the second state.

4. The tablet (10) of any of claims 1-3, wherein the second layer (40) is configured to transition from the first state to the second state in response to a voltage applied to the second layer (40).

5. The tablet (10) of any of claims 1-4, wherein the second layer (40) includes an electrochromic device.

6. The tablet (10) of any of claims 1-5, wherein an input applied to the first layer (20) is in the form of pressure applied to the first layer (20), and the pressure applied to the first layer (20) alters a reflectance of the dispersion cholesteric liquid crystal material and polymer (26).

7. The tablet (10) of claim 6, wherein the first layer (20) is configured to display an image based upon the pressure applied by the user to the first layer (20).

8. The tablet (10) of any of claims 1-7, wherein the first layer (20) and second layer (40) are arranged in a sandwiched relationship.

9. The tablet (10) of any of claims 1-8, comprising a third layer (60) rearward of the second layer (40), the third layer (60) being in the form of a transparent window.

10. The tablet (10) of any of claims 1-9, wherein the first layer (20) includes a first substrate (22) and a second substrate (24) and the dispersion of cholesteric liquid crystal material and polymer (26) is sandwiched between the first substrate (22) and the second substrate (24).

11. The tablet (10) of claim 10, wherein the first substrate (22) is formed of a flexible, polymeric material.

12. The tablet (10) of any of claims 10-11, wherein the first substrate (22) and the second substrate (24) are each coated with a transparent electrically conductive layer (28).

13. The tablet (10) of any of claims 1-12, wherein the first layer (20) is configured to erase an image visible on the first layer (20) in response to a voltage applied to the first layer (20).

14. A method of switching a display (20) of tablet (10) between a customizable display (20) and a blank display (20), the method comprising:
providing a tablet (10) according to any of claims 1-14; and
transitioning the second layer (40) of the tablet (10) between the first state, wherein the second layer (40) is transparent, and the second state, wherein the second layer (40) is opaque.

15. The method of claim 14, comprising positioning a fourth layer rearward of the tablet (10) when the second layer (40) is in the first state.
